# EUROPÄISCHE PATENTSCHRIFT

(11) **EP 2 699 336 B1**
(45) Veröffentlichungstag und Bekanntmachung des Hinweises auf die Patenterteilung: **09.05.2018**
(21) Anmeldenummer: 12723821.0
(22) Anmeldetag: 08.03.2012
(51) Int. Cl.: B01F 3/08, C12C 7/22, C12C 13/00, B01F 5/02, B01F 5/06

(54) **Verfahren zur Hopfengabe bei der Bierherstellung, sowie Hopfenprodukt**
Process for adding hops in beer manufacture, and hop product
Procédé d'apport de houblon dans la préparation de la bière, et produit à base de houblon

(30) Priorität: 21.04.2011 DE 102011018646
(43) Veröffentlichungstag der Anmeldung: 26.02.2014
(73) Patentinhaber: GEA BREWERY SYSTEMS GMBH, 97318 Kitzingen (DE)
(72) Erfinder: SCHELLER, Ludwig, 56729 Ettringen (DE); MICHEL, Rudolf, 96049 Bamberg (DE); BAHNS, Patrick, 97318 Kitzingen (DE)
(74) Vertreter: advotec.
(86) Internationale Anmeldenummer: PCT/DE2012/000226
(87) Internationale Veröffentlichungsnummer: WO 2012/142988

(56) Entgegenhaltungen:
- EP-A1- 1 431 385
- EP-A1- 1 849 452
- EP-A1- 2 417 858
- EP-A2- 0 101 007
- WO-A1-97/03576
- DE-A1- 1 934 709
- DE-A1-102007 062 948
- GB-A- 1 071 867
- GB-A- 1 501 098

## Beschreibung

Die Erfindung betrifft ein Verfahren zur Hopfengabe bei der Bierherstellung nach der Lehre des Verfahrenshauptanspruchs. Weiterhin wird eine Vorrichtung vorgeschlagen, die im Rahmen der Durchführung des erfindungsgemäßen Verfahrens zum Einsatz kommen kann. Zuletzt betrifft die Erfindung ein Verfahrensprodukt, das mit dem erfindungsgemäßen Verfahren herstellbar ist.

Einer der Grundbestandteile bei der Bierherstellung ist der Hopfen. In der Brauerei werden die Blütenstände der weiblichen Pflanzen verwendet. Diese enthalten unter anderem bittere Harze und ätherische Öle als wertgebende Bestandteile, die dem Bier bitternde und aromatische Bestandteile zuführen. Da Hopfenprodukte einen sehr hohen Preis haben, ist eine effektive Nutzung der im Hopfen enthaltenen Bestandteile von großer Bedeutung. Da die wertgebenden Bestandteile (z.B. alpha-Säuren) wasserunlöslich sind, müssen diese zuerst in eine wasserlösliche Form gebracht werden. Diesen Vorgang nennt man Isomerisierung. Er lässt sich unter anderem durch eine Temperaturbehandlung erreichen, wodurch die alpha-Säuren in die Form der iso-alpha-Säuren umgewandelt werden.

Die genauen Vorgänge und Verfahren zur Isomerisierung sind allgemein bekannt und können der einschlägigen Fachliteratur entnommen werden.

Für die Hopfengabe in der Brauerei stehen grundsätzlich drei verschiedene Hopfenprodukte zur Verfügung, nämlich Naturhopfen, Hopfenpellets und Hopfenextrakt. Zur Herstellung von Hopfenextrakten wird eine Extraktion des Naturhopfens durchgeführt, um einzelne Bestandteile aus der Pflanze mithilfe geeigneter Lösungsmittel herauszulösen. Die beste Handhabbarkeit des Hopfens in der Brauerei ergibt sich, wenn flüssiger oder pastöser Hopfenextrakt (im weiteren nur noch Hopfenextrakt genannt) eingesetzt wird, da diese Hopfenextrakte einfach maschinell (z.B. durch Pumpen) gefördert und relativ sehr exakt zudosiert werden können. Bei der Verwendung von Hopfenextrakten wird die Viskosität des Hopfenextrakts zunächst durch Erwärmen auf beispielsweise 45 bis 50 °C herabgesetzt und der dadurch fließ- und pumpfähig gewordene Extrakt dem Brauwasser oder der Würze zugemischt. Ein Problem der Verarbeitung der Hopfenextrakte liegt dabei insbesondere darin, dass sich der Hopfenextrakt, bei dem es sich im Wesentlichen um hydrophobe Bestandteile handelt, nur sehr schlecht mit der wässrigen Umgebung des Brauwassers bzw. der Würze mischen lässt. Doch nur bei ausreichend homogener Mischung des Hopfenextrakts in der wässrigen Umgebung des Brauwassers bzw. der Würze kann eine effektive Isomerisierung der Hopfenbestandteile erwartet werden. Um die Wertbestandteile des Hopfenextrakts quantitativ in die wässrige Lösung zu überführen, kann die Verweildauer des Hopfenextrakts während des Würzekochens erhöht werden, was allerdings bei der heute mehrheitlich durchgeführten Verkürzung der Würzekochzeiten nicht unbegrenzt möglich ist. Auch ist es möglich, die Kochtemperatur zu erhöhen, um die Isomerisierung der alpha-Säuren des Hopfenextrakts zu verbessern. Aber auch dadurch werden teilweise unerwünschte Effekte in der Würze verursacht.

Aus der DE-PS 967 433 ist ein Verfahren zur Ultrabeschallung von Naturhopfen in der Gegenwart von Wasser oder wässrigen Lösungen bekannt, um so die Nutzung der hochwertigen Bitterstoffe aus dem Naturhopfen zu verbessern. Nachteilig an dem dort beschriebenen Verfahren ist es, dass bei Verwendung von Naturhopfen große Mengen an Hopfentreber anfallen, die aufwendig aus der verwendeten Hopfungsvorrichtung entfernt werden müssen, so dass eine zeit- und kostenaufwendige Reinigung der verwendeten Hopfengabevorrichtung unvermeidlich ist.

Aus der DD 1585 58 B1 ist ein einstufiges Verfahren zur Fluidisierung der Bitterstoffe durch Emulgieren von Hopfenextrakt bekannt. Die Makroemulsion wird während des Emulgierens mit einem Inertgas begast, um eine Oxidation der Bitterstoffe zu verhindern.

Eine lagerfähige Xanthohumulon-haltige Emulsion kann erzeugt werden, indem gemäß EP 1 431 385 A1 der wasserunlösliche Xanthohumolonhaltige Ausgangsstoff in beispielsweise Ethanol aufgelöst und nachfolgend in ein Polysorbate enthaltendes Wasserbad gemischt wird. Durch Destillierung wird der unerwünschte Ethanol entfernt und die Verwendung eines Homogenisators verhindert eine Sedimentation des ansonsten unlöslichen Xanthohumolons.

Das Ausflocken bzw. Absetzen eines Öl-haltiges Stoffes in einem Getränk wird beim Einsatz des Verfahrens nach WO 97/03576 A1 weitgehend verhindert, wenn die zunächst erzeugte Mischung mehrmals in einem Hochdruck-Homogenisator behandelt wird, so dass sehr kleine Partikelgrößen der unlöslichen Öl-Phase erzielt wird.

Zur Herstellung einer für einen längeren Zeitraum stabilen Hopfenemulsion wird in der GB 1,071,867 A ein Verfahren vorgeschlagen, bei dem ein vorgewärmtes Hopfenextrakt in einen Mixer zur Vermischung mit Sorbit, Gummiarabikum und Wasser gegeben wird. Anschließend wird die Mischung in einem Hochdruck-Homogenisator zur Homogenisierung behandelt. Verwendet werden kann hierzu ein nicht isomerisiertes Hopfenextrakt, wobei die Hopfenemulsion in diesem Falle zwingend vor oder zumindest während der Würzekochung zur Isomerisierung zuzugeben ist. Empfohlen wird jedoch die Verwendung von bereits zuvor isomerisiertem Hopfenextrakt, so dass eine Zugabe der Hopfenemulsion vorteilhaft nach der Würzekochung erfolgen kann.

In DE 10 2007 062 948 wird ein Verfahren zur Erhöhung der Hopfenausbeute, wobei homogenisiert, aber keine Mikroemulsion erreicht wird, vorgeschlagen. Ausgehend von diesem Stand der Technik ist es deshalb Aufgabe der vorliegenden Erfindung, ein neues Verfahren zur Hopfengabe bei der Bierherstellung vorzuschlagen, mit dem die im Hopfenextrakt enthaltenen Inhaltsstoffe effektiver ausgenutzt werden können. Weiter ist es Aufgabe, eine Mikroemulsion eines Hopfenextrakts in wässriger Lösung vorzuschlagen, die insbesondere mit dem erfindungsgemäßen Verfahren herstellbar ist und zur Herstellung von Bier eingesetzt werden kann. Zuletzt ist es Aufgabe, eine Vorrichtung zur Herstellung dieser wässrigen Mikroemulsion des Hopfenextrakts in wässriger Lösung vorzuschlagen.

Diese Aufgaben werden durch die Lehre der unabhängigen Hauptansprüche gelöst.

Vorteilhafte Ausführungsformen der Erfindung sind Gegenstand der Unteransprüche.

Ausgangspunkt des erfindungsgemäßen Verfahrens ist zunächst die Separation einer Teilmenge des Brauwassers und/oder der Würze und/oder des Biers als wässriges Fluid, mit dem die gewünschte Menge Hopfenextrakt gemischt werden soll. Dies bedeutet mit anderen Worten, dass der Hopfenextrakt nicht in den normalen Volumenstrom des Brauwassers bzw. der Würze oder des Biers während des Brauvorganges eingeschleust wird. Vielmehr wird eine Teilmenge des wässrigen Fluids aus dem Brauprozess abgezweigt und anschließend mit dem erfindungsgemäßen Verfahren unabhängig vom übrigen Volumenstrom im Sudhaus verarbeitet, um den Hopfenextrakt in der separierten Teilmenge möglichst fein zu fluidisieren.

Nach der Separation der gewünschten Teilmenge des wässrigen Fluids wird dieser Teilmenge dann die notwendige Menge des Hopfenextrakts hinzugegeben, so dass eine Mischung des Hopfenextrakts und des wässrigen Fluids entsteht. Die Verteilung des Hopfenextrakts in dieser wässrigen Mischung ist dabei noch relativ grob, da sich die vorwiegend hydrophoben Bestandteile des Hopfenextrakts nahezu nicht in dem wässrigen Fluid lösen lassen.

Um den Hopfenextrakt in dem wässrigen Fluid feiner zu fluidisieren, wird erfindungsgemäß ein zumindest zweistufiger Emulgierprozess vorgeschlagen. In der ersten Stufe dieses Prozesses wird zunächst eine Makroemulsion des Hopfenextrakts durch Emulgieren des Hopfenextrakts im wässrigen Fluid hergestellt. Bei dieser Makroemulsion handelt es sich um eine relativ feine Verteilung von Hopfenextrakttröpfchen (disperse Phase) in dem wässrigen Grundfluid (kontinuierliche Phase), also eine O/W-Emulsion bzw. Öl in Wasser-Emulsion. Untersuchungen haben jedoch gezeigt, dass diese Makroemulsion noch nicht geeignet ist, um die Inhaltstoffe des Hopfenextrakts tatsächlich weitgehend vollständig auszunutzen, da die zur Verfügung stehende Grenzfläche (spezifische Oberfläche) zwischen dem wässrigen Fluid und den Hopfenextrakttröpfchen immer noch relativ klein ist. Erfindungsgemäß ist deshalb zur weiteren Verbesserung der Nutzung des Hopfenextrakts vorgesehen, dass die Makroemulsion mit einem Förderdruck beaufschlagt wird, der höher liegt als 100 bar. Die so druckgespannte Makroemulsion wird anschließend durch einen Spalt, ein Ventil oder gegen eine Prallplatte gefördert und durchläuft dabei einen Hochdruck-Niederdruck-Entspannungszyklus. Dieser Entspannungszyklus führt dazu, dass die Hopfenextrakttröpfchen in der Makroemulsion zerplatzen und auf diese Weise eine Mikroemulsion des Hopfenextrakts in dem wässrigen Fluid entsteht. Die Partikelgröße der Hopfenextrakttröpfchen wird durch die Hochdruck-Niederdruck-Entspannung mindestens um den Faktor 2 verkleinert und die zur Verfügung stehende Grenzfläche zwischen den Hopfenextrakttröpfchen und dem umgebenden wässrigen Fluid entsprechend überproportional vergrößert. Dabei ist unbedingt die zweistufige Zerkleinerung der Hopfenextrakttröpfchen zunächst in die Makroemulsion und dann in die Mikroemulsion notwendig, da die zur Verfügung stehenden Emulgierverfahren jeweils entweder nur für die Überführung der einfachen Mischung aus Hopfenextrakt und wässrigem Fluid in die Makroemulsion oder aus der Makroemulsion in die Mikroemulsion geeignet sind. Eine direkte Überführung der Mischung aus Hopfenextrakt und wässrigem Fluid in die Mikroemulsion ist dagegen nicht möglich.

Nach der Herstellung der Mikroemulsion des Hopfenextrakts wird diese dann zurück in den Hauptvolumenstrom des Brauprozesses zurückgeführt, so dass die im Hopfenextrakt enthaltenen Inhaltsstoffe dort die gewünschten Prozesswirkungen entfalten können. Durch die vorliegende große spezifische Oberfläche der Hopfenextrakttröpfchen ist eine vollständige Extraktion in die wässrige Phase und eine schnelle Isomerisierung gewährleistet.

Die im Hopfenextrakt enthaltenen alpha-Säuren oder Humolone sind die wichtigsten Verbindungen für die Bitterung des Biers. Allerdings sind die alpha-Säuren in ihrem Grundzustand unlöslich und müssen durch Isomerisation in wasserlösliche iso-alpha-Säuren umgewandelt werden, um die gewünschte Bitterung des Biers zu gewährleisten. Um die notwendige Umwandlung der im Hopfenextrakt enthaltenen alpha-Säuren in die gewünschten iso-alpha-Säuren zu gewährleisten, wird die beim erfindungsgemäßen Verfahrens hergestellte Makroemulsion und/oder die im Rahmen des erfindungsgemäßen Verfahrens hergestellte Mikroemulsion des Hopfenextrakts einer Temperaturbehandlung zur Isomerisierung unterworfen werden. Da diese Temperaturbehandlung nur einen sehr kleinen Teil des wässrigen Fluids betrifft, der später das Würzevolumen bildet, besteht die Möglichkeit, diese Temperaturbehandlung ganz und gar auf die Erfordernisse der notwendigen alpha-Säure-Isomerisierung abzustimmen. Gemäß einer bevorzugten Verfahrensvariante ist es deshalb vorgesehen, dass die Makroemulsion und/oder die Mikroemulsion einer Isomerisierungs-Temperaturbehandlung unterworfen wird. Eine Temperaturbehandlung der Würze im Hauptstrom der Bierherstellung zur alpha-Säure-Isomerisierung kann auf diese Weise entfallen. Somit lässt sich die Kochzeit der Würze drastisch verkürzen.

Für die Abgrenzung zwischen der einfachen Mischung aus Hopfenextrakt und wässrigem Fluid einerseits und einer Makroemulsion des Hopfenextrakts in wässriger Lösung sind unterschiedliche Definitionen denkbar. Dies insbesondere deshalb, da es sich bei der Abgrenzung letztendlich um eine statistische Betrachtung der Partikelgrößenverteilung der Hopfenextrakttröpfchen in der wässrigen Lösung handelt. Gemäß einer bevorzugten Variante soll eine Makroemulsion im Sinne der Erfindung dann angenommen werden, wenn mindestens 75% der Hopfenextrakttröpfchen kleiner gleich 20 µm sind. Gemäß einer weiteren Definition liegt eine Makroemulsion vor, wenn 90% der Hopfenextrakttröpfchen eine Partikelgröße von kleiner gleich 23 µm aufweisen. Gemäß einer dritten Definition liegt eine Makroemulsion vor, wenn 50% der Hopfenextrakttröpfchen eine Partikelgröße von kleiner gleich 13 µm aufweisen.

Statt der Größenverteilung kann die Makroemulsion auch durch das arithmetische Mittel der Partikelgröße der Hopfenextrakttröpfchen definiert werden. Bevorzugt weisen die Hopfenextrakttröpfchen in der Makroemulsion im arithmetischen Mittel eine Partikelgröße im Bereich von 6 µm bis 24 µm auf.

Auch die Definition der Mikroemulsion stellt eine statistische Betrachtung der Größenverteilung der Hopfenextrakttröpfchen in der Emulsionsflüssigkeit dar. Gemäß einer bevorzugten Variante gilt als Mikroemulsion im Sinne der Erfindung, wenn 75 % der Hopfenextrakttröpfchen eine Partikelgröße von kleiner als 5 µm, insbesondere von kleiner als 3 µm, aufweisen. Alternativ dazu können auch wieder die prozentualen Anteile der Partikelgröße von 90 % bzw. 50 % zugrunde gelegt werden. Danach gilt als Mikroemulsion im Sinne der Erfindung, wenn 90 % der Hopfenextrakttröpfchen eine Partikelgröße von kleiner gleich 9 µm, insbesondere kleiner gleich 4 µm, aufweisen. Auch gilt als Mikroemulsion im Sinne der Erfindung, wenn 50 % der Hopfenextrakttröpfchen eine Partikelgröße von kleiner gleich 2,5 µm, insbesondere von kleiner gleich 2 µm, aufweisen.

Auch die Mikroemulsion kann durch das arithmetische Mittel der Partikelgröße definiert werden. Bevorzugt weisen die Hopfenextrakttröpfchen in der Mikroemulsion im arithmetischen Mittel eine Partikelgröße im Bereich von 0,5 µm bis 5 µm auf.

Besonders vorteilhaft ist es, wenn das separierte wässrige Fluid vor der Zugabe des Hopfenextrakts unter Druck auf eine Temperatur oberhalb von 100 °C, insbesondere auf eine Temperatur zwischen 120 °C und 140 °C, erhitzt wird. Auf diese Weise kann bei der Zugabe des Hopfenextrakts in das wässrige Fluid eine sehr gute Mischung der Hopfenextrakttröpfchen im wässrigen Fluid erreicht werden, da die erhöhten Temperaturen zu einer Viskositätsverringerung des Hopfenextrakts führen. Außerdem wird durch die erhöhten Temperaturen erreicht, dass die Isomerisation der alpha-Säuren im Hopfenextrakt gestartet wird. Ob während der Temperaturbehandlung eine gewisse Verdampfung stattfindet ist grundsätzlich beliebig.

Alternativ bzw. additiv dazu ist es denkbar, dass die Temperaturbehandlung zur Isomerisierung durch Erwärmung der Hopfenextrakttröpfchen während der Herstellung der Makroemulsion stattfindet. Dazu kann die Makroemulsion beispielsweise während des Emulgierens auf eine Isomerisations-Temperatur erhitzt werden. Durch die erhöhte Temperatur wird außerdem die Verteilung der Hopfenextrakttröpfchen in der Makroemulsion verbessert.

Die im Rahmen des Verfahrens zur Herstellung der Mikroemulsion angewandte Isomerisations-Temperatur sollte im Wesentlichen der Temperatur entsprechen, bei der die Würzekochung im Hauptprozess der Bierherstellung durchgeführt wird. Dadurch wird gewährleistet, dass die Temperaturbelastungen der Würze und die dadurch eingestellten Würzeeigenschaften in beiden Teilprozessen im Wesentlichen gleich sind und ggf. negative Einflüsse auf den späteren Biergeschmack durch das erfindungsgemäße Verfahren ausgeschlossen sind. Bei Anwendung der Hochtemperatur-Würzekochung können also beispielsweise Temperaturen von bis zu 120 - 140 °C in diesem Verfahren vorherrschen.

Mit wie viel Druck die Makroemulsion des Hopfenextrakts durch das vorgesehene Ventil bzw. den vorgesehenen Spalt oder gegen die verwendete Prallplatte gefördert wird, ist grundsätzlich beliebig, solange sich der gewünschte Hochdruck-Niederdruck-Entspannungsprozess entfaltet und die Hopfenextrakttröpfchen entsprechend zerplatzen. Üblicherweise muss der Förderdruck dazu ein Hochdruckniveau einnehmen und dazu bevorzugt auf einem maximalen Druckniveau von größer oder gleich 200 bar liegen. Insbesondere ist die Einstellung eines maximalen Druckniveaus von größer oder gleich 300 bar besonders geeignet, um die Hopfenextrakttröpfchen sehr fein in der wässrigen Lösung zu verteilen. In Versuchen wurden die besten Ergebnisse mit einem Druck von 400 bar erreicht. Über 500 bar sind allerdings hohe Energiekosten zu erwarten.

Eine weitere Änderung der Hopfenextrakttröpfchenverteilung hin zu kleineren Partikeln kann auch dadurch erreicht werden, dass die Mikroemulsion nach erstmaligem Durchlaufen des Hochdruck-Niederdruck-Entspannungsprozesses diesen mindestens ein weiteres Mal durchläuft und dabei ein weiteres Mal druckgespannt und durch einen Spalt oder ein Ventil oder gegen eine Prallplatte gefördert wird. Durch die mindestens eine Wiederholung der Hochdruck-Niederdruck-Entspannung kann die Partikelgröße der Hopfenextrakttröpfchen weiter statistisch verkleinert werden.

In welchem Schritt des Hauptprozesses zur Bierherstellung die Mikroemulsion des Hopfenextrakts wieder zurückgeführt wird, ist grundsätzlich beliebig. Auch ist es beliebig, in welchen Anteilen die Mikroemulsion gegeben wird. Denkbar ist beispielsweise eine Aufteilung in mehrere Teile, die in verschiedenen Schritten oder zu verschiedenen Zeitpunkten in den Prozess gegeben werden. Gemäß einer ersten Variante wird die Mikroemulsion zumindest teilweise vor oder bei der Würzekochung zugegeben.

Alternativ bzw. additiv zur Zugabe der Mikroemulsion während der Würzekochung kann die Mikroemulsion gegebenenfalls auch schon nach dem Abläutern und vor dem Würzekochen erfolgen. Dazu kann die Mikroemulsion anteilig oder gesamt in einen Vorlauftank eingeleitet werden, der zwischen dem Läuterbottich und der nachgeordneten Würzekocheinrichtung zwischengeschaltet ist.

Gemäß einer dritten Variante kann die Mikroemulsion des Hopfenextrakts anteilig oder gesamt auch vor oder während der Trubabscheidung der Würze zugegeben werden, da die Trubabscheidungsprozesse durch die Inhaltsstoffe des Hopfenextrakts positiv beeinflusst werden können.

Gemäß einer vierten Variante kann die Mikroemulsion des Hopfenextrakts auch zwischen Trubabscheidung und Würzekühlung zugegeben werden. Dadurch reduzieren sich die Hopfenverluste über den Trub. Falls eine Anlage zur Nachverdampfung (Strippinganlage) zwischen Trubabscheidung und Würzekühlung vorhanden ist, könnte die Mikroemulsion auch nach der Nachverdampfung zugegeben werden, um Aromaverluste durch die Verdampfung zu reduzieren. Es kann jedoch sinnvoll sein, wenigstens einen Teil der Mikroemulsion vor oder in den Prozess der Würzekochung zuzugeben, um die Heißtrub-Bildung zu unterstützen.

Mit dem erfindungsgemäßen Verfahren wird eine wässrige Mikroemulsion eines Hopfenextrakts zur Verwendung bei der Bierherstellung hergestellt. Vorteilhaft weisen mindestens 75% der Hopfenextrakttröpfchen in der Mikroemulsion eine Partikelgröße von kleiner als 5 µm auf.

Zur Durchführung des erfindungsgemäßen Verfahrens wird eine Vorrichtung vorgeschlagen, die zwei Partikelzerkleinerungsstufen aufweist. In der ersten Partikelzerkleinerungsstufe wird dabei die Mischung aus einerseits Wasser und/oder Würze und/oder Bier und andererseits Hopfenextrakt zu einer Makroemulsion emulgiert. In der zweiten Partikelzerkleinerungsstufe wird diese Makroemulsion dann mit einer Förderpumpe auf Hochdruck, insbesondere auf einen Druck von mehr als 100 bar, gespannt und anschließend durch einen Spalt oder ein Ventil oder gegen eine Prallplatte gefördert. Durch den dabei ablaufenden Hochdruck-Niederdruck-Entspannungsprozess werden die Hopfenextrakttröpfchen der Makroemulsion weiter aufgespalten und bilden dadurch eine Mikroemulsion des Hopfenextrakts.

Welche Art von Gerät in der ersten Partikelzerkleinerungsstufe zur Emulgierung des Gemischs aus wässrigem Fluid und Hopfenextrakt eingesetzt wird, ist grundsätzlich beliebig. Besonders geeignet ist dabei ein Scherrührer. Alternativ sind auch Ultraschallapplikationen in der ersten Partikelzerkleinerungsstufe denkbar.

Durch die homogene Verteilung der Hopfenextrakttröpfchen in der mit dem erfindungsgemäßen Verfahren hergestellten Mikroemulsion entsteht ein sehr stabiles Produkt, welches auch bei niedrigeren Temperaturen, insbesondere bei Raumtemperatur, problemlos lagerfähig ist. Somit ist es besonders vorteilhaft, wenn der Vorrichtung zur Herstellung der Mikroemulsion ein Speichergefäß nachgeordnet ist, in dem die Mikroemulsion zwischengespeichert werden kann. Auf diese Weise kann die Mikroemulsion unabhängig vom Hauptprozess zur Bierherstellung hergestellt und dann jeweils an die notwendigen Prozessorte aus dem Speichergefäß weitergefördert werden. Denkbar ist auch eine weitere Isomerisierung der Mikroemulsion in dem Speichergefäß dadurch, dass dieses Gefäß zusätzlich zu einer guten Dämmung mit einer Vorrichtung zum Konstanthalten der Temperatur auf Isomerisierungs-Temperatur ausgestattet (z.B. Tankheizung zur Kompensierung der Abstrahlverluste) ist. Damit die Temperatur im gesamten Gefäß konstant gehalten wird, ist ein Rührwerk oder eine Umpumpeinrichtung im Speichergefäß denkbar.

Die hergestellte Mikroemulsion ist ohne weiteres auch bei Raumtemperatur pumpfähig, was gegenüber dem üblicherweise verwendeten Hopfenextrakt einen großen Vorteil darstellt. Auch sind für das Pumpen der Mikroemulsion keine teuren Verdrängerpumpen notwendig, sondern z.B. einfache Kreiselpumpen. Aufgrund dieser guten Pumpfähigkeit ist es außerdem ohne weiteres möglich, die Vorrichtung zur Herstellung der Mikroemulsion oder das nachgeordnete Speichergefäß zur Zwischenspeicherung der Mikroemulsion über entsprechende Förderleitungen mit nachgeordneten Prozessgefäßen und/oder den dazwischen angeordneten Rohrleitungen im Sudhaus zu verbinden. Auf diese Weise kann die erfindungsgemäß hergestellte Mikroemulsion problemlos auch über weite Strecken an jeden Ort des Sudhauses oder des Gärkellers gefördert und dort eingesetzt werden. Besonders vorteilhaft ist es, wenn die Förderleitungen für die Mikroemulsion zur Läutereinrichtung (Läuterbottich) und/oder zu einem Vorlauftank zwischen dem Läuterbottich und der Würzepfanne und/oder zu einer Würzekocheinrichtung und/oder zu einer Trubabscheideeinrichtung (Whirlpool) und/oder zu einer Einrichtung zur Nachverdampfung (Stripping) und/oder zu einem Würzekühler verlaufen.

Verschiedene Aspekte der Erfindung sind in den Zeichnungen und Diagrammen in den Figuren schematisch dargestellt und werden nachfolgend beispielhaft erläutert.

Es zeigen:
- Fig. 1: eine schematisierte Darstellung der Integration einer Vorrichtung zur erfindungsgemäßen Herstellung einer Mikroemulsion des Hopfenextrakts in eine Sudhausanlage;
- Fig. 2: die Partikelgrößenverteilung der Hopfenextrakttröpfchen in einer Mikroemulsion im Vergleich zu einer Makroemulsion;
- Fig. 3: die Messdaten zur Charakterisierung der Partikelgrößenverteilung in der gemäß Fig. 2 dargestellten Makroemulsion;
- Fig. 4: die Messwerte der Partikelgrößenverteilung in der gemäß Fig. 2 dargestellten Mikroemulsion;
- Fig. 5: die Partikelgrößenverteilung einer Mikroemulsion, die zweifach druckgespannt durch ein Homogenisierungsventil gefördert wurde, im Vergleich zu den Partikelgrößenverteilungskurven gemäß Fig. 2.

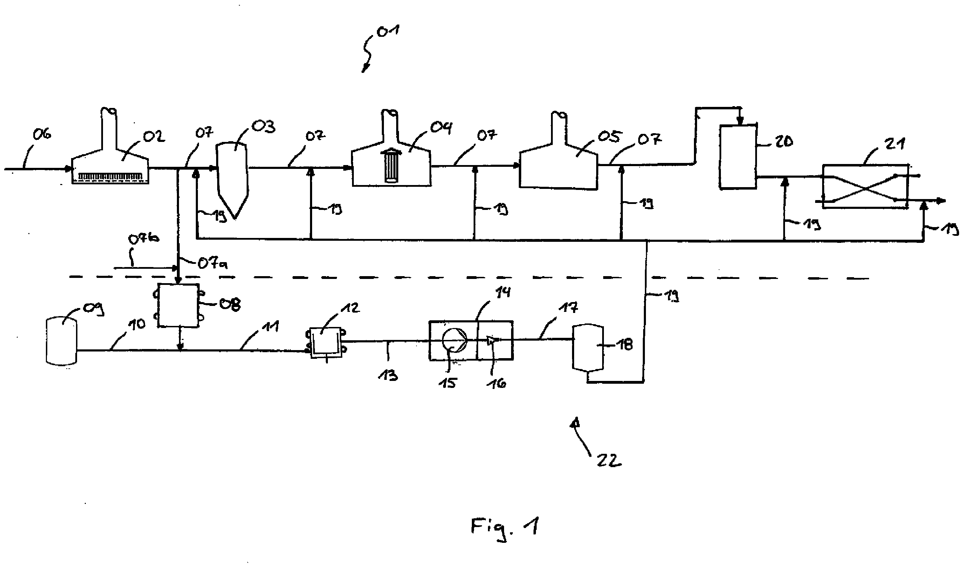

Fig. 1 stellt lediglich schematisiert den Aufbau eines Sudhauses 01 mit einem Läuterbottich 02, einem Vorlaufgefäß 03, einer Würzepfanne 04 und einem Whirlpool 05 dar. Nach dem Maischprozess wird die Maische 06 im Läuterbottich 02 abgeläutert und dadurch Würze 07 erhalten. Die Würze 07 wird dann nacheinander durch die verschiedenen Gefäße 03, 04 und 05 des Sudhauses 01 hindurchgefördert, um in bekannter Weise Bier herzustellen. Dieser Prozess ist ohne Weiteres bekannt. Dem Sudhaus 01 ist eine Vorrichtung 22 zur Herstellung einer wässrigen Mikroemulsion 17 eines Hopfenextrakts zugeordnet.

Von der am Läuterbottich 02 erhaltenen Würze 07 wird eine Teilmenge 07a der Würze separiert und in eine beheizbare erste Partikelzerkleinerungsstufe 12 der Vorrichtung 22 gepumpt. Die erste Partikelzerkleinerungsstufe 12 kann beispielsweise ein Scherrührer sein. Alternativ kann in die Leitung auch eine beliebige andere Vorrichtung 08 zur Erhitzung des Fluids 07 eingebaut werden. In diesem Fall muss die erste Partikelzerkleinerungsstufe 12 nicht beheizbar sein. Außerdem wird aus einem Hopfenvorratsgefäß 09 Hopfenextrakt 10 in die erste Partikelzerkleinerungsstufe 12 gepumpt und dort mit der Würzeteilmenge 07a vermischt. Ergänzend können auch noch weitere Fluide 07b, beispielweise Wasser und/oder Bier, zugemischt werden. Die Vermischung erfolgt dabei unter Druck und unter Temperatureinfluss, beispielsweise von 130 °C, um eine möglichst gute Verteilung des Hopfenextrakts in der Würze 07a zu erreichen und zugleich eine Isomerisierung der in dem Hopfenextrakt enthaltenen alpha-Säuren zu gewährleisten.

Durch Antrieb des Scherrührers werden die in der Mischflüssigkeit 11 noch grob verteilten Hopfenextrakttröpfchen soweit verkleinert, dass eine Makroemulsion entsteht, bei der mindestens 75% der Hopfenextrakttröpfchen eine Partikelgröße von kleiner gleich 20 µm aufweisen. Nach Durchlaufen der ersten Partikelzerkleinerungsstufe 12 wird die dabei erhaltene Makroemulsion 13 dann in eine zweite Partikelzerkleinerungsstufe 14 gepumpt, die aus einer Hochdruckpumpe 15 und einem Hochdruckentspannungsventil 16 besteht. Die Makroemulsion 13 wird mittels der Hochdruckpumpe 15 auf einen Druck von beispielsweise 250 bar vorgespannt und durch das Hochdruckentspannungsventil 16 hindurchgefördert. Durch die Druckentlastung der unter Hochdruck stehenden Makroemulsion 13 werden die darin enthaltenen Hopfenextrakttröpfchen weiter verkleinert und es entsteht eine Mikroemulsion 17. Die Mikroemulsion 17 ist dabei insbesondere dadurch charakterisiert, dass mindestens 75% der Hopfenextrakttröpfchen eine Partikelgröße von kleiner gleich 5 µm aufweisen. Die Mikroemulsion 17 kann anschließend in einem Speichergefäß 18 zwischengespeichert werden. Über Förderleitungen 19 kann die Mikroemulsion 17 später dann zeitversetzt in den Hauptvolumenstrom der Würze 07 zurückgefördert werden, wobei die Mikroemulsion 17 dadurch wahlweise in das Vorlaufgefäß 03, in die Würzepfanne 04 oder in den Whirlpool 05 oder in die Rohrleitungen zwischen diesen Gefäßen oder vor oder nach einer Vorrichtung zur Nachverdampfung (Stripping) 20 oder vor oder nach einem Würzekühler 21 eingebracht werden kann. Dabei ist es insbesondere auch denkbar, dass jeweils nur Teilmengen der insgesamt notwendigen Hopfenextraktmenge über die Mikroemulsionsförderleitungen an die verschiedenen Stellen des Würzehauptstroms gebracht werden. Die einzelnen Abschnitte der Förderleitungen 19 können dazu wahlweise mit verschiedenen, nicht dargestellten Absperrventilen abgesperrt werden.

Auch denkbar sind mehrere parallel geschaltete Anlagenteile 08a..n, 09a..n, 12a..n, 14a..n und/oder 18a..n, um verschiedene Extrakte (Bitterextrakt und Aromaextrakt) gleichzeitig oder nacheinander zu behandeln und zwischenzuspeichern. Die dabei hergestellten Mikroemulsionen 17a..n werden dann an verschiedenen Stellen des Prozesses in unterschiedlichen Mengen eingesetzt, um die entsprechenden Hopfengeschmacksnoten für verschiedene Biersorten zu erzeugen. Beispielsweise ist es denkbar, mehrere Vorräte 09a..n und entsprechend viele Speichergefäße 18a..n zu installieren. Die beiden Partikelzerkleinerungsstufen 12 und 14 sind z.B. nur ein- oder zweimal vorhanden. Nun wird aus jeder Hopfenextraktsorte im Vorrat 09a..n eine Mikroemulsion 17a..n hergestellt, im Speichergefäß 18a..n zwischengespeichert und von dort in den Herstellungsprozess eingebracht. Die Leitung 19 kann in diesem Fall ebenfalls ein- oder mehrfach (19a..n) vorhanden sein.

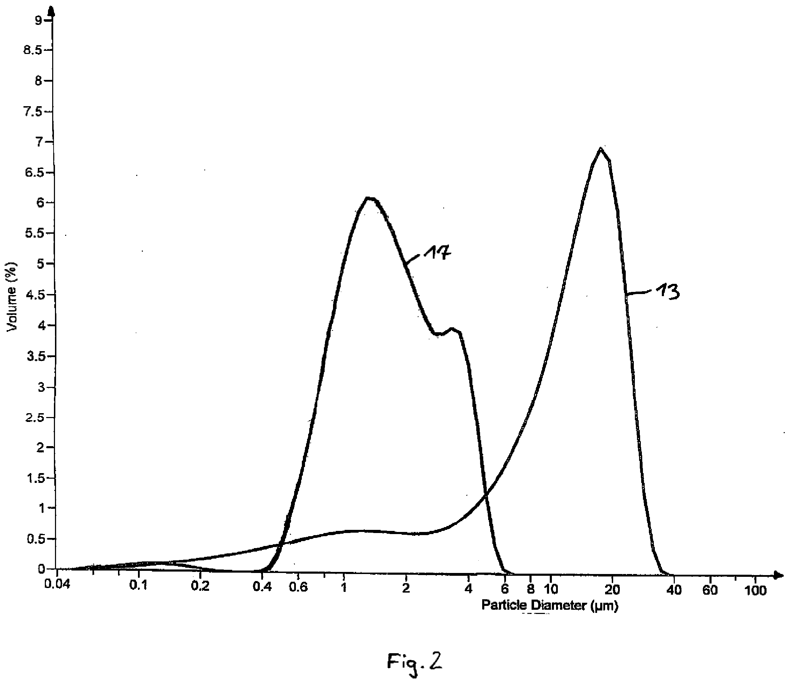

Fig. 2 zeigt in einem Diagramm die Verteilung der Partikelgrößen der Hopfenextrakttröpfchen in einer Makroemulsion 13 im Vergleich zu einer Mikroemulsion 17. Man erkennt, dass das Maximum der Partikelgrößenverteilung durch die zweite Partikelzerkleinerungsstufe 14 von einem Partikeldurchmesser von ca. 20 µm in Richtung 1 µm verschoben ist. Durch diese Verkleinerung der Partikelgröße wird die Reaktionsoberfläche, an der die im Hopfenextrakt enthaltenen Inhaltsstoffe in die wässrige Lösung übergehen können, signifikant vergrößert und dadurch die Nutzung des Hopfenextrakts erheblich verbessert.

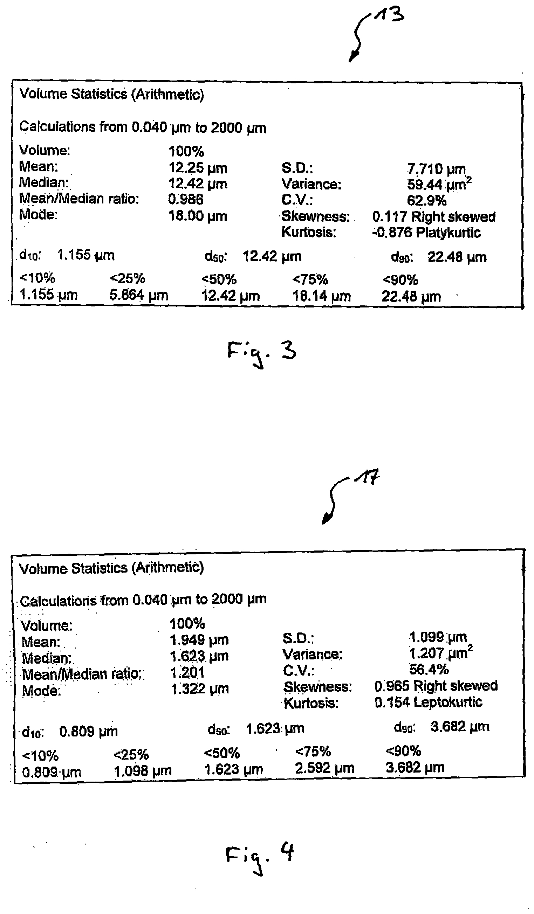

Fig. 3 zeigt die Messdaten aus Versuchen hinsichtlich der Partikelgrößenverteilung in einer Makroemulsion 13. Daraus geht hervor, dass bei der dargestellten Variante mindestens 75% der Hopfenextrakttröpfchen in der Makroemulsion eine Partikelgröße von kleiner als 18,14 µm aufweisen. Mindestens 90% der Hopfenextrakttröpfchen weisen eine Partikelgröße von kleiner als 22,48 µm auf. Mindestens 50% der Hopfenextrakttröpfchen weisen eine Partikelgröße von kleiner als 12,42 µm auf. Mindestens 25% der Hopfenextrakttröpfchen weisen eine Partikelgröße von kleiner als 5,864 µm auf. Mindestens 10% der Hopfenextrakttröpfchen weisen eine Partikelgröße von kleiner als 1,155 µm auf. Die Hopfenextrakttröpfchen in der Makroemulsion 13 weisen im arithmetischen Mittel eine Partikelgröße von 12,25 µm auf.

Fig. 4 stellt die Messdaten zur Partikelgrößenverteilung in einer Mikroemulsion 17 dar. Bei der dargestellten Variante wurde die Mikroemulsion durch Druckentspannung der auf 250 bar vorgespannten Makroemulsion 13 hergestellt. Wie Fig. 4 zu entnehmen ist, wird durch diese Druckentspannung eine Herabsetzung der Partikelgrößen der Hopfenextrakttröpfchen realisiert. So weisen mindestens 75% der Hopfenextrakttröpfchen in der Mikroemulsion 17 eine Partikelgröße von kleiner 2,592 µm auf. Mindestens 90 % der Hopfenextrakttröpfchen weisen eine Partikelgröße von kleiner als 3,682 µm auf. Mindestens 50% der Hopfenextrakttröpfchen weisen eine Partikelgröße von kleiner als 1,623 µm auf. Mindestens 25% der Hopfenextrakttröpfchen weisen eine Partikelgröße von kleiner als 1,098 µm auf. Mindestens 10% der Hopfenextrakttröpfchen weisen eine Partikelgröße von kleiner als 0,809 µm auf. Die Hopfenextrakttröpfchen in der Mikroemulsion 17 weisen im arithmetischen Mittel eine Partikelgröße von 1,949 µm auf.

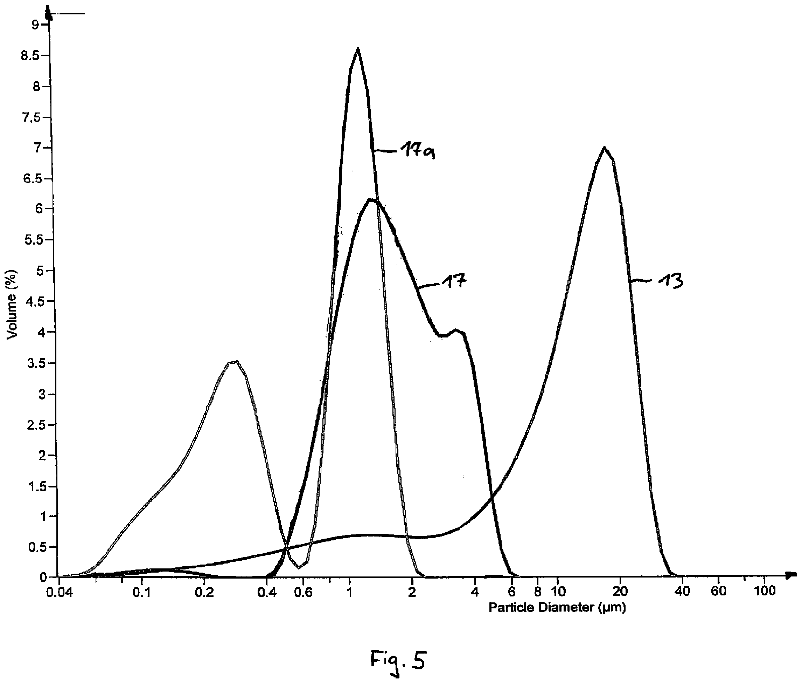

Fig. 5 stellt wiederum die Partikelgrößenverteilung der Makroemulsion 13 und der Mikroemulsion 17 dar. Daneben ist in Fig. 5 noch die Partikelgrößenverteilung in einer Mikroemulsion 17a dargestellt. Die Mikroemulsion 17a wird dadurch erhalten, dass die Mikroemulsion 17 erneut auf 500 bar druckgespannt und durch das Hochdruckentspannungsventil 16 durchgefördert wird. Man erkennt, dass diese zweifach druckentspannte Mikroemulsion 17a eine weitere Verkleinerung der Partikelgrößenverteilung ergibt, wobei die Partikelgrößenverteilung dabei zwei relative Maxima aufweist.

## Patentansprüche

1. Verfahren zur Hopfengabe bei der Bierherstellung, mit folgenden Verfahrensschritten:
a) Separation einer Teilmenge (07a) Wasser und/oder Würze (07) und/oder Bier als wässriges Fluid,
b) Zugabe von Hopfenextrakt (10) in flüssiger oder pastöser Form in das separierte wässrige Fluid (07a),
c) Herstellung einer Makroemulsion (13) des Hopfenextrakts durch Emulgieren des Hopfenextrakts (10) im wässrigen Fluid (07a),
d) Erhöhung des Drucks in der Makroemulsion (13) des Hopfenextrakts auf einen Förderdruck von mehr als 100 bar,
e) Herstellung einer Mikroemulsion (17) des Hopfenextrakts durch Förderung der druckgespannten Makroemulsion (13) durch einen Spalt oder ein Ventil (16) oder durch Förderung der druckgespannten Makroemulsion gegen eine Prallplatte,
f) zumindest teilweise Rückführung der Mikroemulsion (17) des Hopfenextrakts in den Herstellungsprozess des Biers
wobei die Mischung aus wässrigem Fluid (07a) und Hopfenextrakt (10) und/oder die Makroemulsion (13) und/oder die Mikroemulsion (17) des Hopfenextrakts einer Isomerisations-Temperaturbehandlung unterworfen wird, wobei während dieser Temperaturbehandlung eine Umwandlung der alpha-Säuren des Hopfenextrakts in iso-alpha-Säuren erfolgt.

2. Verfahren nach Anspruch 1,
**dadurch gekennzeichnet,**
**dass** mindestens 75% der Hopfenextrakttröpfchen in der Makroemulsion (13) eine Partikelgröße von kleiner als 20 µm aufweisen.

3. Verfahren nach Anspruch 1 oder 2,
**dadurch gekennzeichnet,**
**dass** die Hopfenextrakttröpfchen in der Makroemulsion (13) im arithmetischen Mittel eine Partikelgröße im Bereich von 6 µm bis 24 µm aufweisen.

4. Verfahren nach einem der Ansprüche 1 bis 3,
**dadurch gekennzeichnet,**
**dass** mindestens 75% der Hopfenextrakttröpfchen in der Mikroemulsion (17) eine Partikelgröße von kleiner als 5 µm aufweisen.

5. Verfahren nach einem der Ansprüche 1 bis 4,
**dadurch gekennzeichnet,**
**dass** die Hopfenextrakttröpfchen in der Mikroemulsion (17) im arithmetischen Mittel eine Partikelgröße im Bereich von 0,5 µm bis 5 µm aufweisen.

6. Verfahren nach einem der Ansprüche 1 bis 5,
**dadurch gekennzeichnet,**
**dass** das separierte wässrige Fluid (07a) vor der Zugabe des Hopfenextrakts (10) unter Druck auf eine Temperatur oberhalb von 100 °C erhitzt wird.

7. Verfahren nach Anspruch 5 oder 6,
**dadurch gekennzeichnet,**
**dass** die Isomerisations-Temperaturbehandlung durch Erwärmung der Makroemulsion (13) stattfindet.

8. Verfahren nach einem der Ansprüche 1 bis 7,
**dadurch gekennzeichnet,**
**dass** der Förderdruck zur Herstellung der Mikroemulsion (17) des Hopfenextrakts bei einem maximalem Druckniveau von größer oder gleich 200 bar liegt.

## Claims

1. A method for adding hops in beer manufacture, having the following process steps:
a) separation of a sub-quantity (07a) of water and/or wort (07) and/or beer as an aqueous fluid,
b) addition of hop extract (10) in liquid or pasty form to the separated aqueous fluid (07a),
c) production of a macroemulsion (13) of the hop extract by emulsifying the hop extract (10) in the aqueous fluid (07a),
d) increasing the pressure in the macroemulsion (13) of the hop extract to a feed pressure of higher than 100 bar,
e) production of a microemulsion (17) of the hop extract by feeding the pressurized macroemulsion (13) through a gap or a valve (16) or by feeding the pressurized macroemulsion against a baffle plate,
f) at least partial return of the microemulsion (17) of the hop extract to the beer manufacturing process,
wherein the mixture of aqueous fluid (07a) and hop extract (10) and/or the macroemulsion (13) and/or the microemulsion (17) of the hop extract is subjected to an isomerization temperature treatment, wherein during said temperature treatment a conversion of the alpha acids of the hop extract into iso-alpha acids takes place.

2. The method according to claim 1,
**characterized in that**
at least 75 % of the hop extract droplets in the macroemulsion (13) have a particle size of less than 20 µm.

3. The method according to claim 1 or 2,
**characterized in that**
the hop extract droplets in the macroemulsion (13) have a mean particle size in the range of 6 µm to 24 µm.

4. The method according to any of the claims 1 to 3,
**characterized in that**
at least 75 % of the hop extract droplets in the microemulsion (17) have a particle size of less than 5 µm.

5. The method according to any of the claims 1 to 4,
**characterized in that**
the hop extract droplets in the microemulsion (17) have a mean particle size in the range of 0.5 µm to 5 µm.

6. The method according to any of the claims 1 to 5,
**characterized in that**
prior to the addition of the hop extract (10), the separated aqueous fluid (07a) is heated under pressure to a temperature above 100 °C.

7. The method according to claim 5 or 6,
**characterized in that**
the isomerization temperature treatment takes place by heating the macroemulsion (13).

8. The method according to any of the claims 1 to 7,
**characterized in that**
the feed pressure for the production of the microemulsion (17) of the hop extract is at a maximum pressure level greater than or equal to 200 bar.

## Revendications

1. Procédé de houblonnage dans la préparation de la bière, comprenant les étapes suivantes :
a) séparer une quantité partielle (07a) d'eau et/ou de moût (07) et/ou de bière comme fluide aqueux,
b) ajouter de l'extrait de houblon (10) sous forme liquide ou pâteuse au fluide aqueux (07a) séparé,
c) produire une macroémulsion (13) de l'extrait de houblon en émulsionnant l'extrait de houblon (10) dans le fluide aqueux (07a),
d) augmenter la pression dans la macroémulsion (13) de l'extrait de houblon à une pression de transport supérieure à 100 bar,
e) produire une microémulsion (17) de l'extrait de houblon en transportant la macroémulsion (13) pressurisée à travers une fente ou une soupape (16) ou en transportant la macroémulsion pressurisée contre un déflecteur,
f) recycler au mois une partie de la microémulsion (17) de l'extrait de houblon au processus de préparation de la bière,
dans lequel le mélange de fluide aqueux (07a) et d'extrait de houblon (10) et/ou la macroémulsion (13) et/ou la microémulsion (17) de l'extrait de houblon est soumis(e) à un traitement thermique d'isomérisation, les acides alpha de l'extrait de houblon étant convertis en acides iso-alpha pendant ledit traitement thermique.

2. Procédé selon la revendication 1,
**caractérisé en ce qu'**
au moins 75 % des gouttelettes de l'extrait de houblon dans la macroémulsion (13) présentent une taille particulaire inférieure à 20 µm.

3. Procédé selon la revendication 1 ou 2,
**caractérisé en ce que**
les gouttelettes de l'extrait de houblon dans la macroémulsion (13) présentent une taille particulaire allant de 6 µm à 24 µm en moyenne arithmétique.

4. Procédé selon l'une quelconque des revendications 1 à 3,
**caractérisé en ce qu'**
au moins 75 % des gouttelettes de l'extrait de houblon dans la microémulsion (17) présentent une taille particulaire inférieure à 5 µm.

5. Procédé selon l'une quelconque des revendications 1 à 4,
**caractérisé en ce que**
les gouttelettes de l'extrait de houblon dans la microémulsion (17) présentent une taille particulaire allant de 0,5 µm à 5 µm en moyenne arithmétique.

6. Procédé selon l'une quelconque des revendications 1 à 5,
**caractérisé en ce qu'**
avant l'ajout de l'extrait de houblon (10), le fluide aqueux (07a) séparé est chauffé sous pression à une température supérieure à 100 °C.

7. Procédé selon la revendication 5 ou 6,
**caractérisé en ce que**
le traitement thermique d'isomérisation est effectué en chauffant la macroémulsion (13).

8. Procédé selon l'une quelconque des revendications 1 à 7,
**caractérisé en ce que**
la pression de transport pour la production de la microémulsion (17) de l'extrait de houblon est à un niveau de pression maximal supérieur ou égal à 200 bar.
